# EUROPEAN PATENT APPLICATION

(11) **EP 2 747 349 A1**
(43) Date of publication of application: **25.06.2014**
(21) Application number: 12306637.5
(22) Date of filing: 20.12.2012
(51) Int. Cl.: H04L 12/46

(54) **Home network and method of operation thereof**

(71) Applicant: Thomson Licensing, 92130 Issy-les-Moulineaux (FR)
(72) Inventor: Chanet, Dominique, 9310 Aalst (BE); Dumet, Sylvain, 1785 Merchtem (BE); van de Poel, Dirk, 2630 AARTSELAAR (BE)
(74) Representative: Arnold, Klaus-Peter

(57) **Abstract**

A home network comprises a middleware communications bus (1) and a plurality of devices connected to said middleware communications bus (1). At least one of said devices comprises a local participant (2, 3) and a native middleware library (4) for transmitting information between said local participant (2, 3) and said middleware communications (1) bus by presenting an application programming interface (5) to said local participant (2, 3). At least one of said devices is a remote device (9) which comprises a remote participant (11, 12) and a bridging middleware library (13) and is connected to said middleware communications bus (1) by at least one external communication channel (10). The bridging middleware library (13) transmits information between said remote participant (12, 13) and said external communications channel (10) by presenting said same application programming interface (5) to said remote participant (11, 12).

## Description

In recent years, the diversity of sources from which consumers can obtain audio, video or text media has increased considerably, and in many households the stand-alone TV set of past decades has been replaced by a home network comprising a variety of devices such as a satellite receiver, a set-top box, an Internet gateway device etc. Interoperability of these devices is ensured by their software being based on a common middleware, e.g. the Jungo OpenRG middleware, Technicolor's upcoming Revolution/MediaGEN middleware, or others.

From a network point of view, these various physical devices can be regarded as providers, i.e. network components which offer a service that can be used by other components, or consumers, which make use of the services offered by the providers. In practice, many of the physical devices of a network can comprise one or more providers and/or consumers. In the following, "participant" is used as a generic term for providers and consumers.

An important part of conventional middleware is the conduit used for communication between the participants in a network. This conduit is commonly called a communications bus and is often the only way by which devices of a network can interact with each other.

US 7 983 285 B2 discloses a home network in which devices which are based on different middlewares are made interoperable by means of a gateway which is connected to a first device by a first middleware communications bus and to a second device by a second middleware communications bus and which translates a message received on one of the buses into a message compatible with the other bus for forwarding.

This prior art system may have a certain interest for a consumer who possesses some legacy devices based on a first type of middleware and wants to continue using these together with a new device that uses a second type of middleware. However, it cannot offer to the consumer any uses beyond those which a network based on a single middleware would have.

With the advent of ubiquitous mobile devices such as smartphones and tablet PCs in the home, considerable interest has arisen in being able to integrate these into a home network, too. However, while conventional set-top boxes and the like came with a specific middleware which ensured their interoperability and could provide some operator control by which this middleware could be updated if necessary, e.g. to accommodate new types of devices in a home network, these novel mobile devices come with no middleware at all, but with operating systems such as Android, iOS or Windows-phone OS. As these devices are not under the control of the network operator, in most cases it is not possible to integrate them directly into a home network which is based on that operator's middleware.

A further problem is that all conventional middleware communication buses are designed to ensure communication between devices which are not mobile and are not far apart from each other, typically within a consumer's house or flat, or even within a same apparatus casing. If a mobile device such a tablet PC or a smartphone is integrated into such a network, and the consumer leaves his home, taking the mobile device with him, all the device's connections to the home-network are severed. Conventional middleware is not designed to cope with such a situation.

Still further, existing remote control protocols such as CWMP or SNMP are used by operators for updating the middleware of network devices deployed in user's homes, but offer no ways of introducing additional services.

The object of the present invention is to provide a home network and a method of operation thereof by which the above-described drawbacks can be overcome.

This object is achieved, on the one hand, by a home network comprising a middleware communications bus and a plurality of devices connected to said middleware communications bus, wherein at least one of said devices comprises a local participant and a native middleware library for transmitting information between said local participant and said middleware communications bus by presenting an application programming interface (API) to said local participant, and at least one of said devices is a remote device which comprises a remote participant and a bridging middleware library and is connected to said middleware communications bus by at least one external communication channel, the bridging middleware library transmitting information between said remote participant and said external communication channel by presenting said same application programming interface to said remote participant.

In this way, a remote device can be included in a home network by means of a remote participant which may be identical regardless of the type of external communication channel used, whereas the bridging middleware library may be specific for a given external communication channel, but is the same for any remote device communicating by that channel. Therefore, devices by different manufacturers and using different operating systems can be incorporated into the network with little development effort.

The network should further comprise a bridging unit connected between said external communications channel and said middleware communications bus for converting messages circulating on one of these into a format suitable for transmission on the other.

Preferably, the bridging unit makes use of the same native middleware library as does the local participant mentioned above for forwarding information between said external communications channel and said middleware communications bus, i.e. the bridging unit does not translate messages received by said external communications channel directly into messages transmitted on the middleware communications bus, but addresses the API of the native middleware library instead, whereupon the latter generates messages for transmission on the middleware communications bus. In this way, any changes and updates in the native middleware library are effective for local and remote participants alike, and the amount of development effort that has to be spent in library maintenance and adaptation of the native middleware library to different hardware platforms is not increased by a network's capability of accommodating remote devices.

The bridging unit may be connected to a plurality of external communication channels. There can be plural channels of the same type, or of different types, for maintaining simultaneous links to a plurality of remote devices, or for linking at different times to a same device, depending on the communication quality available on a given channel at a given time.

If more than one remote participant can be linked to the network at the same or at different times, it is advantageous that the bridging unit present to the native middleware library a proxy participant associated to each remote participant, so that other network participants, by addressing one of these proxy participants, are enabled to communicate selectively with any one of the various remote participants.

If communication with a remote participant breaks down on one of said external communication channels, the bridging unit may maintain the proxy participant associated with said remote participant in existence, and, if communication is resumed with said same participant on the same or any other channel, it may continue to use said proxy participant for that remote participant's communication with the middleware communications bus. In this way, other network participants can be kept unawares if the link between the bridging unit and the remote participant is temporarily interrupted and is re-established later by a different external communications channel, e.g. because a mobile device has left the range of a costumer's domestic wireless LAN and later reconnected to his home network using e.g. a cell-phone network as said external communication channel.

In order to enable a distinction between various remote participants, the bridging unit should be adapted to negotiate an ID of each remote participant to which it is linked.

The external communication channel can be of any known type, in particular a cell-phone network, a WiFi network or the Internet. The remote device can be a smartphone or a mobile computer, which a customer may use to access his home network while he is away from home. It can also be a web-based application by which e.g. functionalities of the local devices of the home network can be updated or enhanced.

According to a second aspect, the object of the invention is further achieved by a method of operating a home network comprising a middleware communications bus and a plurality of devices connected to said middleware communications bus, wherein at least one of said devices comprises a local participant and a native middleware library for transmitting information between said local participant and said middleware communications bus by presenting an application programming interface to said local participant, and at least one of said devices is a remote device which comprises a remote participant, the method comprising the steps of
- implementing, in said remote device, a bridging middleware library for presenting said same application programming interface to said remote participant,
- connecting said remote device to said middleware communications bus by an external communication channel, and
- transmitting information between said remote participant and said external communication channel using said bridging middleware library.

Further features and advantages of the invention will become apparent from a subsequent description of embodiments thereof, referring to the appended drawings.
- Fig. 1: is a schematic diagram of a network according to the invention;
- Fig. 2: is a diagram illustrating the exchange of messages between a remote participant and the middleware communications bus of the network of Fig. 1 under normal, continuous operating conditions; and
- Fig. 3: is a diagram illustrating the exchange of messages in case of interruption of an external communication channel.

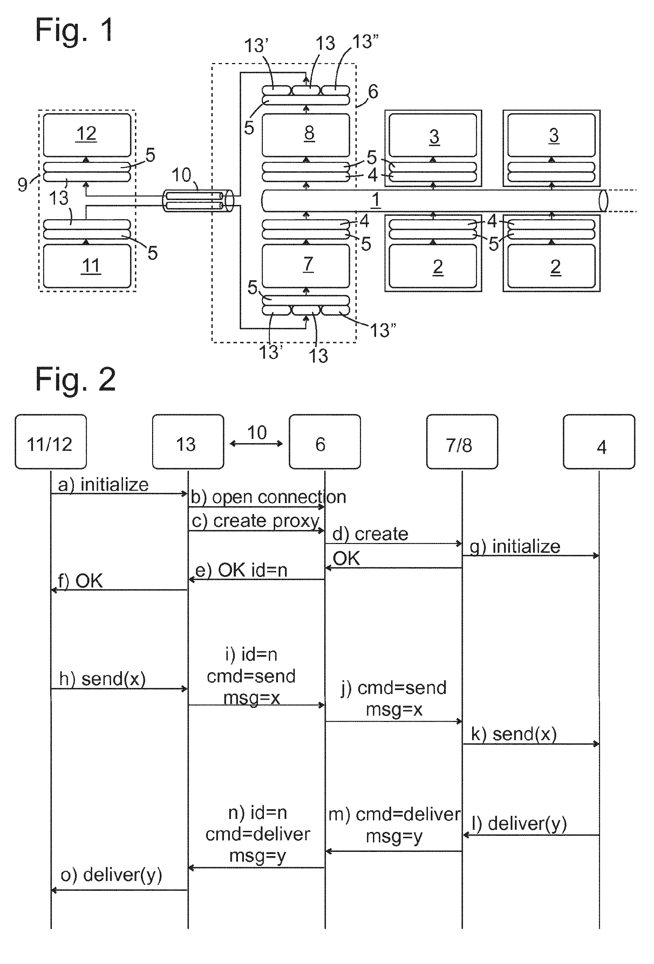

In Fig. 1, reference numeral 1 denotes a conventional middleware communications bus 1 which enables communication between a variety of network components. Physically, these components can be of various types, e.g. satellite receivers, set-top boxes, Internet gateway devices etc. For the purpose of the present description, it is not necessary to distinguish between these various physical device types, any device can be regarded as comprising one or more participants, which may either be providers 2 or consumers 3.

The middleware communications 1 bus may be confined within a single physical device, i.e. within a set-top box, it may have an electronic program guide component and a scheduled recordings component for carrying out recordings at times programmed by a user as providers 2, and a program guide user interface for outputting a graphic representation of program information to a TV screen, or a DLNA media server that exports recordings carried out under control of the scheduled recordings component to a rendering device, as consumers 3. Alternatively, the middleware communications bus 1 may also interconnect various physically separate devices.

For sending information to the bus 1 and receiving information from it, all participants 2, 3 make use of a shared library, referred to here as the "native middleware library" 4, in order to allow it to be distinguished from another type of library which will be described further on. The native middleware library 4 presents a same application programming interface (API) 5 to all participants 2, 3, which these must use in order to exchange information with the bus 1. Such an API typically consists of a set of procedure calls (for procedural languages like C) or objects with a well-defined interface (in object-oriented languages like Java). These procedure calls or object methods can then be invoked by a provider 2 to provide data on the network, or by a consumer 3 to extract information from the network.

The middleware communications bus 1 further has a bridging unit 6 connected to it. In Fig. 1, bridging unit 6 is shown to comprise one proxy provider 7 and one proxy consumer 8, which use the same native middleware library 4 and API 5 for communicating with the bus 1 as the other local participants 2, 3 do. The bridging unit 6 is connected to a remote device 9, e.g. a smartphone or a tablet PC, by an external communication channel 10. The external communication channel 10 can be of a variety of types known as such, e.g. a wired connection, for instance a USB connection, a wireless LAN connection, or a connection via a public telephone network, in particular a cell-phone network.

The remote device 9 may be regarded as comprising at least one of a remote provider 11, which communicates messages to be forwarded to the middleware communications bus 1 to proxy provider 7, and a remote consumer 12, to which messages are forwarded by proxy consumer 8. The remote provider 11 and remote consumer 12 are programmed against exactly the same API 5 as is used by local participants 2, 3 and proxy participants 7, 8. However, in the remote device 9 this API 5 is presented to participants 11, 12 not by native middleware library 4 but by a bridging middleware library 13.

Bridging middleware library 13 transforms a message from remote provider 11 not into a format suitable for transmission on the middleware communications bus 1, as native middleware library 4 does, but into a format adapted to be transmitted by the external communication channel 10 to proxy provider 7. Proxy provider 7 uses a copy of the same bridging middleware library 13 to restore the original message. The restored message is then directly addressed to the API 5 presented by the native middleware library 4 of proxy provider 7 in order to have the message forwarded to some consumer 3 by middleware communications bus 1. Conversely, proxy consumer 8 receives messages from bus 1, has bridging middleware library 13 transform these into a format suitable for transmission on external communication channel 10, and the bridging middleware library 13 of remote device 9 presents these messages to remote consumer 12 in exactly the same format as native middleware library 4 would present them to a local consumer 3. In this way, while native middleware library 4 hides details of the implementation of bus 1 from the local participants 2, 3, bridging middleware library 13 hides details of the external communication channel 10, so that no participant can tell from the API 5 it is interacting with whether another participant it is communicating with is local or remote.

The bridging unit 6 may have several bridging middleware libraries 13, 13', ..., each of which is associated to a specific type of external communication channel by which the bridging unit 6 can communicate with an external device, and one of which is assigned to the proxy participants 7, 8 depending on the specific channel 10 by which the external device 9 happens to connect to the network. In analogy, the external device can also have various bridging middleware libraries, one for each type of communication channel supported by it.

Since the APIs 5 presented by native and bridging middleware libraries 4, 13 are identical, applications can be written without regard to whether they will be running on a local or a remote device. This greatly facilitates the creation of applications which can be run on different hardware devices, since the application can be written in a hardware-independent language, taking account of hardware specifics only at compilation.

At a transport layer level, the bridging middleware library 13 may use a bidirectional, persistent connection, e.g. a TCP socket or a WebSocket connection for communication between remote and proxy participants, which allows the middleware communications bus 1 to send unsolicited messages to remote participants 11, 12. In practice, bidirectionality can be emulated by a stateless HTTP connection and regular polling by the remote participant.

If the bridging unit 6 is adapted to accept as remote device 9 also some Internet-based device, a secure authenticated connection, for example HTTPS or Secure WebSockets should be used in order to guarantee the privacy and integrity of the home network.

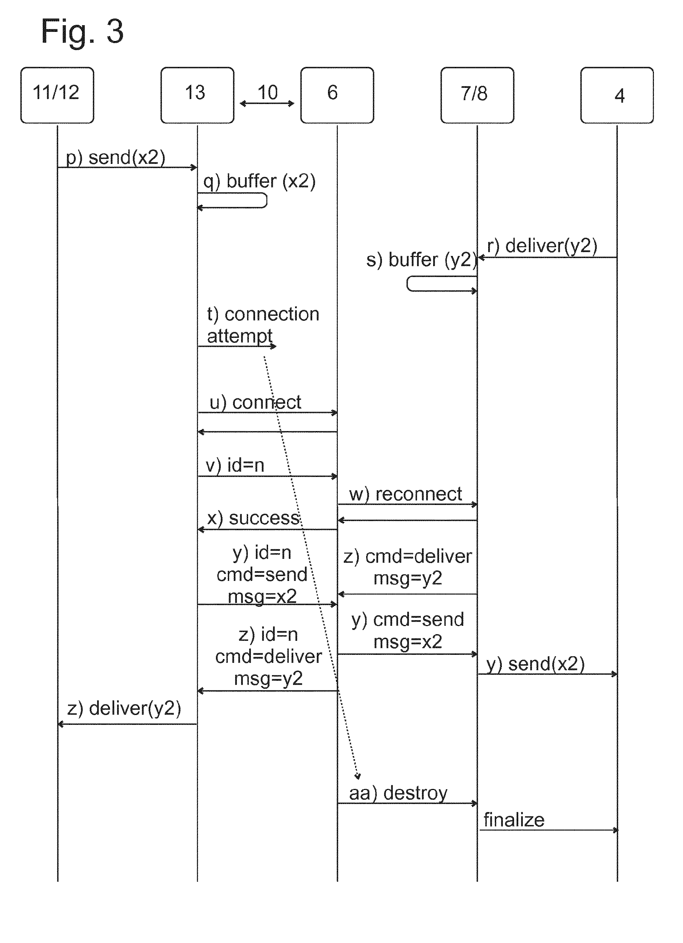

An example of communication flow through the middleware bridge 6 will be described referring to Fig. 2 and 3. For the purpose of illustration, a simple middleware communication bus with four primitive operations will be considered, namely:
- initialize: creates a connection between a participant and the bus 1;
- finalize: disconnects a participant from the bus 1;
- send(x): sends message x to all bus participants;
- deliver(y): delivers message y sent by some other participant.

Fig. 2 is a sequence diagram which illustrates initialization and normal operation of a remote participant, i.e. remote provider 11 or remote consumer 12. Since the remote participant is programmed against exactly the same API 5 as provided by native middleware library 4, remote participant 11/12 issues an initialize command (a) just in the same way as a local participant 2 or 3 would do. This command is received by bridging library 13, which thereupon opens a connection to the bridging unit 6 (b) and requests it to establish a proxy participant 7/8 to be associated to remote participant 11/12 (c). If the proxy participant 7/8 can be created (d), i.e. if a maximum number of proxy participants supported by bridging unit 6 is not exceeded, bridging unit 6 will return to bridging library 13 of the remote device 9 a confirmation (e) that the proxy participant has been successfully created, and an identity n which has been assigned to the new proxy participant 7/8. Bridging library 13 will forward to remote device 11/12 only a confirmation (f) that the proxy participant is in existence. The remote participant 11/12 is not informed of the assigned identity n, since it does not have to be aware of it, and transmission of the identity is not supported by the API 5. Meanwhile, proxy participant 7/8 restores the initialize command and forwards it to bus 1 (g)

The remote participant 11/12 can now send (h) any message x in a form compliant with API 5. Bridging library 13 transmits (i) to bridging unit 6 an information packet comprising the identity n, a send command, and the information x to be sent. Based on the identity n, bridging unit 6 forwards (j) a send instruction and the information x to proxy participant 7/8, which thereupon restores the send(x) operation and issues it (k) to the API 5 of the native middleware library 4. The message x received thereupon by all participants connected to bus 1 is indistinguishable from the message which would have been sent by a local participant.

Conversely, a message y sent on bus 1 by some other participant is received (l) by proxy participant 7/8, has the identity n of the proxy participant 7/8 associated to it by bridging unit 6 and is transmitted (n) to bridging library 13 of the remote participant associated to proxy participant 7/8 via external communication channel 10. Bridging library 13 presents (o) exactly the same message deliver(y) to remote participant 11/12 as would have been received by a local participant.

In this way, the remote participant 11/12 can communicate with all other participants connected to middleware communications bus 1 just as if it was locally connected.

Since the remote device 9 is a mobile device, there is the possibility that communication between remote participants 11, 12 based in said device 9 and the middleware communications bus 1 is interrupted, e.g. because a user takes device 9 out of the communication range of a wireless LAN serving as the external communication channel 10. Under these circumstances, and as illustrated in Fig. 3, an operation of sending (p) a message x2 triggered by participant 11/12 will be received by bridging library 13, but cannot be forwarded to bridging unit 6. In such a case, the message x2 is buffered (q) at the bridging library 13 of the remote device 9.

Similarly, a message y2 circulating on middleware communications bus 1 is received (r) by proxy participants 7/8 but cannot be forwarded by bridging unit 6 and is therefore buffered (s) in bridging unit 6 in association with proxy participant 7/8.

Bridging library 13, upon failure to transmit message x2, will attempt (t) to reconnect the bridging unit 6. The attempt for reconnection may involve switching over to another external communication channel 10 than the one previously used, and to another version of bridging library 13 adapted for communication on said other external communication channel 10. E.g. if transmission by wireless LAN has failed, other external channels may be tried in a predetermined order. For example, it might be verified whether a wired connection, e.g. by USB cable, exists between the remote device 9 and the bridging unit 6, and, if yes, the remote device 9 switches to a bridging library 13 which supports USB communication. If not, it switches to a version of the library 13 which supports communication by a cell-phone network and attempts to reconnect by this way. If a connection attempt succeeds (u) and triggers a response from bridging unit 6, library 13 communicates (v) the identity n associated to the remote participant 11/12, whereupon bridging unit 6 reconnects (w) to the proxy participant 7/8 having the same identity n. When bridging library 13 receives a confirmation (x) that reconnection has been successful, buffered message x2 is retrieved from the buffer and is handed through (y) to communications bus 1 via bridging unit 6, proxy participant 7/8 and native library 4, as described above with respect to Fig. 2. Concurrently, proxy participant 7/8 unbuffers message y2 and forwards it (z) to remote participant 11/12 via bridging unit 6 and bridging library 13.

If all attempts for reconnection fail within a predetermined time after interruption, bridging unit 6 assumes that the link to remote device 9 is definitely lost. In that case, bridging unit 6 instructs (aa) proxy participant 7/8 to finalize its connection to bus 1, and destroys proxy participant 7/8, so that the resources occupied by it can be assigned to a new proxy participant when required.

Although the concepts of the invention have been described above referring to a mobile remote device 9, it is readily apparent that the procedures described above can be used without substantial modification also in case of a web-based remote device and the external communication channel 10 being an Internet connection. By allowing such Internet-based remote devices 9 access to the network, the services a user of the network shown in Fig. 1 can enjoy can be expanded far beyond those provided by the local participants 2, 3. Therefore, the user does not necessarily have to buy new hardware for any novel service he may want to use. Therefore, he can be certain that he will have a long-term return on his investment in the network, and that in the future he may be able to use services in his network that were even not known to him at the time of its purchase.

## Claims

1. A home network comprising a middleware communications bus (1) and a plurality of devices connected to said middleware communications bus (1), wherein at least one of said devices comprises a local participant (2, 3) and a native middleware library (4) for transmitting information between said local participant (2, 3) and said middleware communications (1) bus by presenting an application programming interface (5) to said local participant (2, 3), **characterized in that** at least one of said devices is a remote device (9) which comprises a remote participant (11, 12) and a bridging middleware library (13) and is connected to said middleware communications bus (1) by at least one external communication channel (10), the bridging middleware library (13) transmitting information between said remote participant (12, 13) and said external communications channel (10) by presenting said same application programming interface (5) to said remote participant (11, 12).

2. The network of claim 2, further comprising a bridging unit (6) connected between said external communications channel (10) and said middleware communications bus (1).

3. The network of claim 3, wherein the bridging unit (6) makes use of said native middleware library (4) for forwarding information between said external communications channel (10) and said middleware communications bus (1).

4. The network of claim 2 or 3, wherein the bridging unit (6) is connected to a plurality of external communication channels (10).

5. The network of claim 2, 3 or 4, wherein the bridging unit (6) is adapted to present to the native middleware library (4) a proxy participant (7, 8) associated to the external participant (11, 12).

6. The network of claim 5, wherein in case of communication with the remote participant (11, 12) breaking down on one of said external communication channels (10), the bridging unit (6) maintains said proxy participant (7, 8) in existence and, if communication is resumed with said same remote participant (11, 12) on any other channel (10), uses said proxy participant (7, 8) for communication with the middleware communications bus (1) .

7. The network of one of claims 2 to 6, wherein the bridging unit (6) is adapted to negotiate with each remote participant (11, 12) an ID of said remote participant (11, 12).

8. The network of any of the preceding claims, wherein the external communication channel (10) is one of a cell phone network, a WiFi network, and the Internet.

9. The network of any of the preceding claims, wherein the remote device (9) is one of a smartphone, a mobile computer and an Internet-based application.

10. A method of operating a home network comprising a middleware communications bus (1) and a plurality of devices connected to said middleware communications bus (1), wherein at least one of said devices comprises a local participant (2, 3) and a native middleware library (4) for transmitting information between said local participant (2, 3) and said middleware communications bus (1) by presenting an application programming interface (5) to said local participant (2, 3), and at least one of said devices is a remote device (9) which comprises a remote participant (11, 12), comprising the steps of
- implementing, in said remote device (9), a bridging middleware library (13) for presenting said same application programming interface (5) to said remote participant (12, 13),
- connecting said remote device (9) to said middleware communications bus (1) by an external communication channel (10), and
- transmitting information between said remote participant (11, 12) and said external communications channel (10) using said bridging middleware library (13) .
